Europäisches Patentamt

European Patent Office

Office européen des brevets

(19)

(11) Publication number: **0 221 543 B1**

# EUROPEAN PATENT SPECIFICATION

(12)

(45) Date of publication of patent specification: **17.07.91**

(51) Int. Cl.⁵: **B08B 1/04**, B63B 59/10

(21) Application number: **86115339.3**

(22) Date of filing: **05.11.86**

(54) **Device capable of adhering to a wall surface by suction and moving therealong.**

(30) Priority: **05.11.85 JP 247667/85**

(43) Date of publication of application:
**13.05.87 Bulletin 87/20**

(45) Publication of the grant of the patent:
**17.07.91 Bulletin 91/29**

(84) Designated Contracting States:
**DE FR GB SE**

(56) References cited:
**DE-A- 2 750 023**
**FR-A- 2 002 527**
**FR-A- 2 256 657**
**FR-A- 2 369 952**
**US-A- 4 095 378**

(73) Proprietor: **Urakami, Fukashi**
**5-21-204 Konandai 4-chome Konan-ku**
**Yokohama(JP)**

(72) Inventor: **Urakami, Fukashi**
**5-21-204 Konandai 4-chome Konan-ku**
**Yokohama(JP)**

(74) Representative: **Patentanwälte Beetz sen. -**
**Beetz jun. Timpe - Siegfried - Schmitt-**
**Fumian**
**Steinsdorfstrasse 10**
**W-8000 München 22(DE)**

## Description

### BACKGROUND OF THE INVENTION

I. Field of the Invention

This invention relates to a device capable of suction-adhering to a wall surface by the pressure of an ambient fluid such as air or water and moving along the wall surface.

2. Description of the Prior Art

A device for performing work such as cleaning of the outside wall surface of a ship, the outside wall surface of an oil reservoir tank, the outside surface of a tall building, etc. is proposed in U. S. Patent 4,095,378 to F. Urakami which comprises a pressure receiver housing, a plurality of wheels provided in the pressure receiver housing for contact with the wall surface, a partition having one end connected to the pressure receiver housing and adapted to define a substantially fluid-tight pressure reduction zone in cooperation with the pressure receiver housing and the wall surface upon partial contact with the wall surface, means for discharging fluid from the pressure reduction zone to create a vacuum within the pressure reduction zone, and working means provided in the pressure receiver housing.

In this conventional device, a vacuum is formed within the pressure reduction zone by vacuum-producing means, and a part of the partition is contacted fluid-tight with the wall surface by the fluid pressure acting on the partition owing to a difference in fluid pressure between the inside and outside of the pressure reduction zone. In the meanwhile, the fluid pressure acting on the pressure receiver housing owing to a difference in fluid pressure between the inside and outside of the pressure reduction zone is transmitted to the wall surface via the wheels. As a result, the device is caused to adhere by suction to the wall surface. The device suction-adhering to the wall surface is adapted to move along the wall surface by driving the wheels. Hence, the above-described device can adhere to the wall surface by suction and move along it. By the working means provided in it, it can perform the desired work such as cleaning of the wall surface.

In the known device, means for causing the device to adhereby suction to the wall surface and travelling means for moving the device are constructed as separate independent units. A treating means for cleaning the wall surface of performing another treatment is also provided independently. This structure increases the size and weight of the entire device and leads to a high cost of production.

### SUMMARY OF THE INVENTION

It is an object of this invention to provide a novel and excellent device which can surely adhere to a wall surface by suction and moving along the wall surface in a required manner by a simple construction, and which is conducive to a reduction in size and the cost of production.

Another object of this invention is to provide a novel and excellent device capable of suction-adhering to a wall surface and treating the wall surface while moving along it.

Other objects of this invention will become apparent from the following description.

According to this invention, there is provided a device capable of adhering to a wall surface by suction by the pressure of an ambient fluid and moving along the wall surface, said device comprising

a pressure receiver member made of a rigid or a semirigid material,

a partition disposed on that side of the pressure receiver member which is opposite to the wall surface, said partition being rotatable about an axis of rotation slightly inclined to an axis substantially perpendicular to the wall surface, and a part of said partition being adapted to make contact with the wall surface to define a pressure reduction zone in cooperation with the pressure receiver member and the wall surface,

means for creating a vacuum within the pressure reduction zone by discharging the fluid from the pressure reduction zone, and

a driving source mounted on the pressure receiver member for rotating the partition with respect to the pressure receiver member;

wherein the device is caused to adhere to the wall surface by suction owing to a difference in fluid pressure between the inside and outside of the pressure reduction zone, and the device is moved by rotating the partition through the driving source.

### BRIEF DESCRIPTION OF THE DRAWINGS

Figure I is a top plan view showing a first embodiment of the device constructed in accordance with this invention;

Figure 2 is a side elevation of the device shown in Figure I;

Figure 3 is a sectional view taken along line III-III of Figure I;

Figure 4 is a bottom view showing part of the partition of the device of Figure I on an enlarged scale;

Figure 5-A and 5-B are simplified views for illustrating the travelling directions of the device

shown in Figure I;

Figure 6 is a top plan view of a second embodiment of the device constructed in accordance with this invention;

Figure 7 is a side elevation of the device shown in Figure 6;

Figure 8 is a sectional view taken along line VIII-VIII of Figure 6; and

Figure 9 is a sectional view showing a third embodiment of the device constructed in accordance with this invention.

## DETAILED DESCRIPTION OF PREFERRED EMBODIMENTS

Preferred embodiments of the device constructed in accordance with this invention will be described in detail with reference to the accompanying drawings.

With reference mainly to Figures I to 3, the first embodiment of the device of this invention will be described.

The apparatus of the first embodiment shown in Figures I to 3 includes a pressure receiver member 2 made of a rigid or semirigid material such as a steel plate. The pressure receiver member 2 may be of any suitable shape which defines a pressure reduction zone 4 in cooperation with a partition and a wall surface to which the device adheres by suction. In the illustrated embodiment, the pressure receiver member 2 is of a nearly parallelpipedal box-like shape, and a nearly circular opening 6 is formed on that side which faces a wall surface 8.

A nearly circular rotating plate IO which can be formed of, for example, a steel plate is disposed on that side of the opening 6 of the pressure receiver member 2 which faces the wall surface 8 (i.e., on that side of the pressure receiver member 2 which faces the wall surface 8). A driving source I2 such as an electric motor capable of rotating in normal and reverse directions is mounted on the top wall of the pressure receiver member 2, and an output shaft I2a of the driving source IO extends toward the wall surface 8. Over the rotating plate IO is provided a connecting member I4 having a securing portion I6a and arm portions I6b extending radially from the securing portion I6a, and the arm portions I6b are fixed to the rotating plate IO. The securing portion I6a of the connecting member I4 is connected to the output shaft I2a of the driving source I2.

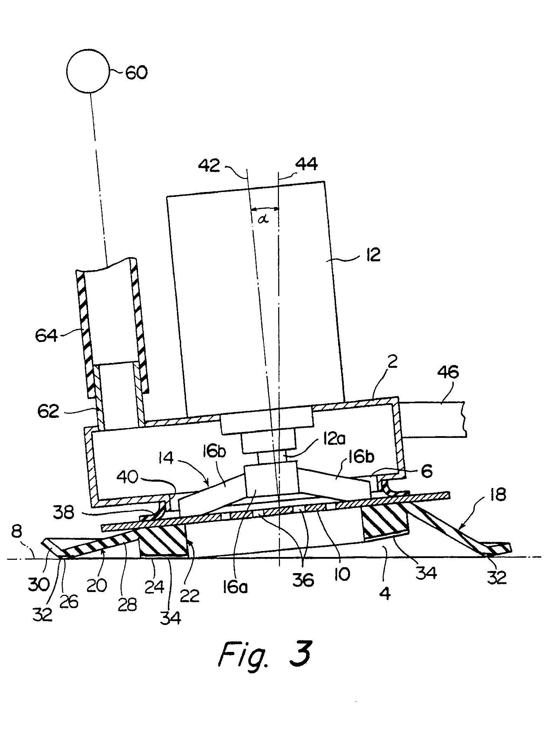

A partition I8 is disposed on the peripheral edge portion of the rotating plate IO. As can be seen from Figure 3, the partition I8 defines a pressure reduction zone 4 in cooperation with the pressure receiver member 2 and the wall surface 8. As shown in the drawings, the partition I8 preferably

has a seal portion 20 disposed on the peripheral portion of the rotating plate IO and defining the pressure reduction zone 4 in cooperation with the pressure receiver member 2 and the wall surface 8, and a supporting portion 22 disposed inwardly of the seal portion 20. Preferably, at least that part of the seal portion 20 which makes contact with the wall surface 8 is so constructed as to be able to be displaced toward and away from the wall surface 8 by a relatively small force with respect to the pressure receiver member 2. In the illustrated embodiment, the supporting portion 22 is formed of an annular member 24 and is fixed to that surface of the rotating plate IO which faces the wall surface 8. The seal portion 20 comprises a main portion 28 extending from one end to the other end (free end) outwardly and toward the wall surface 8 and having a free end portion 26 to be contacted with the wall surface 8, and an extension 30 extending from the free end portion 26 of the main portion 28 outwardly and away from the wall surface 8, and the one end portion of the main portion 28 is connected to the top peripheral surface of the annular member 24. The one end portion of the main portion 28 may alternatively be directly connected to the peripheral edge portion of the rotating plate IO. In the illustrated embodiment, the seal portion 20 and the supporting portion 22 are formed of a polyurethane rubber into a one-piece unit. Alternatively, the seal portion 20 may be formed of a flexible material, and the supporting portion 22 is separately formed of a relatively rigid material such as hard rubber.

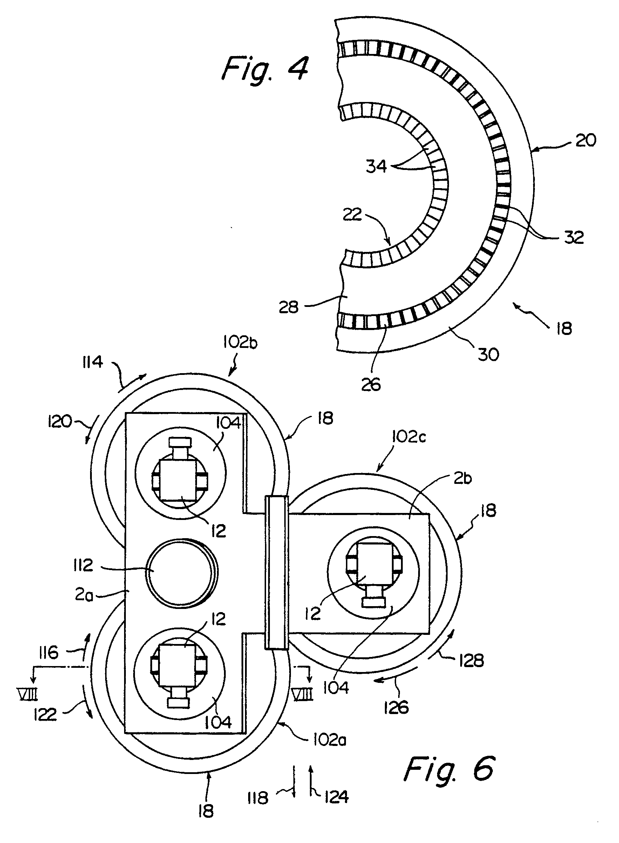

With reference to Figures 3 and 4, in the illustrated embodiment, a plurality of first grooves 32 communicating between the inside and outside of the pressure reduction zone 4 are formed in the free end portion 26 of the main portion 28 of the seal portion 20. The first grooves 32 are spaced from each other circumferentially on the inside surface of the free end portion 26, and each of the grooves 32 extends radially outwardly. The first grooves 32 may have a suitable cross-sectional shape, and in the illustrated embodiment, it has a nearly rectangular cross section. The number of the first grooves 32 and their cross-sectional areas may be properly determined. As will be easily understood from a description given hereinafter, if the number of the grooves 32 or their cross-sectional area is increased, the amount of the fluid flowing into the pressure reduction zone 4 via the first grooves 32 increases, and therefore, a vacuum producing means (to be described hereinafter) having a relatively large size and high ability is required to reduce the pressure of the inside of the pressure reduction zone 4 as is required. On the other hand, if the number or the cross-sectional surface of the grooves 32 is decreased, the amount of the fluid flowing through the first grooves 32 decreases and therefore, the ability to recover the removed dirts in the treating operation to be described is reduced. In view of the foregoing, seventy-two first grooves 32 are formed at substantially equal intervals in the circumferential direction on the free end portion 26 having a diameter of about 120 mm at the main portion 28 of the seal portion 20 in the illustrated embodiment. The cross-sectional shape of the first grooves 32 is a square with one side measuring 1 mm. A plurality of circumferentially spaced second grooves 34 are formed on the inner surface of the annular member 24 (the surface contacting the wall surface 8). Each of the second grooves 34 extends through the annular member 24 radially outwardly. The cross-section of the second grooves 34 may also be of a suitable shape, and in the illustrated embodiment, the cross section is nearly rectangular. The number and cross-sectional area of the second grooves 34 may also be prescribed properly. Preferably, the second grooves 34 have a larger cross-sectional area than the first grooves 32 so that the fluid flowing through the first grooves 32 further flows sufficiently through the second grooves 34. In the illustrated embodiment, twenty-four second grooves 34 are formed at substantially equal intervals in the circumferential direction on the annular member 24 having a diameter of about 65 mm, and the second grooves 34 have a square cross-sectional shape each side measuring 4 mm.

The rotating plate 10 to which the partition 18 is attached has formed therein a plurality of holes 36 for communication between a first zone of the pressure reduction zone 4 defined by the rotating plate 10, the partition 18 (particularly the seal portion 20) and the wall surface 8 and a second zone of the pressure reduction zone 4 defined by the rotating plate 10 and the pressure receiver member 2. Preferably, an annular seal member 38 is disposed between the pressure receiver member 2 and the rotating plate 10 as shown in Figure 3. In the illustrated embodiment, the seal member 38 is connected at one end portion to the peripheral surface of a flange portion 40 provided in the peripheral edge of the opening 6 of the pressure receiver member 2, and extends from the one end portion outwardly and toward the rotating plate 10. The other end portion of the seal member 38 is thus kept in contact with the rotating plate 10. Desirably, the seal member 38 is made of a nonpermeable and flexible material such as rubber.

It is critical that the embodiment is constructed such that the rotating plate 10, and therefore the partition 18, rotates about an axis 42 of rotation slightly inclined to an axis 44 substantially perpendicular to the wall surface 8. For this purpose, in the first embodiment, the central axis of the output shaft 12a of the driving source 12 is slightly inclined to the axis 44. Thus, when the driving source 12 is operated, the rotating plate 10 and the partition 18 rotate as a unit about the central axis of the output shaft 12a, i.e. the axis 42 of rotation slightly inclined to the axis 44, via the connecting member 14. The rotation of the partition 18 about the slightly inclined axis 42 of rotation makes the partition 18 function also as a travelling means as will be described in detail hereinbelow. The angle α formed between the axis 44 substantially perpendicular to the wall surface 8 and the central axis of the output shaft 12a of the driving source 12, i.e. the axis 42 of rotation of the partition 44 (in other words, the angle α of inclination of the axis 42 of rotation of the partition 18) is set at about 3 degrees in the illustrated embodiment.

A rigid frame member 46 is fixed to the pressure receiver member 2. The rigid frame member 46 extends from its one end portion fixed to the pressure receiver member 2 in a direction opposite to the inclined direction of the rotation axis 42 of the partition 18, and its other end portion is fixed to a deceleration means 48 (more specifically, a housing for the deceleration means 48). The input side of the deceleration means 48 is drivingly connected to an electric motor 50 rotatably in normal and reverse directions constituting a driving source and mounted on the housing of the deceleration means 48. The output side of the deceleration means 48 is drivingly connected to a wheel 52 rotatably mounted on the housing. The rigid frame 46 has a leg portion 54 on which a wheel 56 is rotatably mounted. Sprockets 52a and 56a are provided integrally in the wheels 52 and 56, and a roller chain 58 is wrapped between the sprockets 52a and 56a. Preferably, a material having a high coefficient of friction such as rubber is disposed on the peripheral surfaces of the wheels 52 and 56 in order to increase a frictional force between them and the wall surface 8. Thus, when the electric motor 50 is rotated, the wheel 52 is rotated via the deceleration means 48 and the wheel 56 is also rotated via the roller chain 58. To cause the device to travel in a required manner, at least one driving wheel is provided. Instead of the wheel, at least one driven endless track may be provided. It is possible also to connect an operating rod or the like to the pressure receiver member 2 and move the device in the desired direction by an operator operating the operating rod without the need to provide such a wheel or endless track in the pressure receiver member 2. As will be understood from the following description, it is preferred that the aforesaid pair of wheels 52 an d 56 be disposed substantially parallel to the direction of a tangent to that site of the supporting portion 22 which makes contact with the wall surface 8.

The pressure reduction zone 4 defined by the pressure receiver member 2, the wall surface 8 and the partition 18 communicates with an evacuating means 60 (means for producing a vacuum within the pressure reduction zone 4) such as a vacuum pump. In the illustrated embodiment, a connecting portion 62 communicating with the pressure reduction zone 4 is provided on the top wall of the pressure receiver member 2, and one end portion of a flexible hose 64 is connected to the connecting portion 62. The other end portion of the flexible hose 64 communicates with the evacuating means 60.

Now, the operation and advantages of the device in the first embodiment will be described.

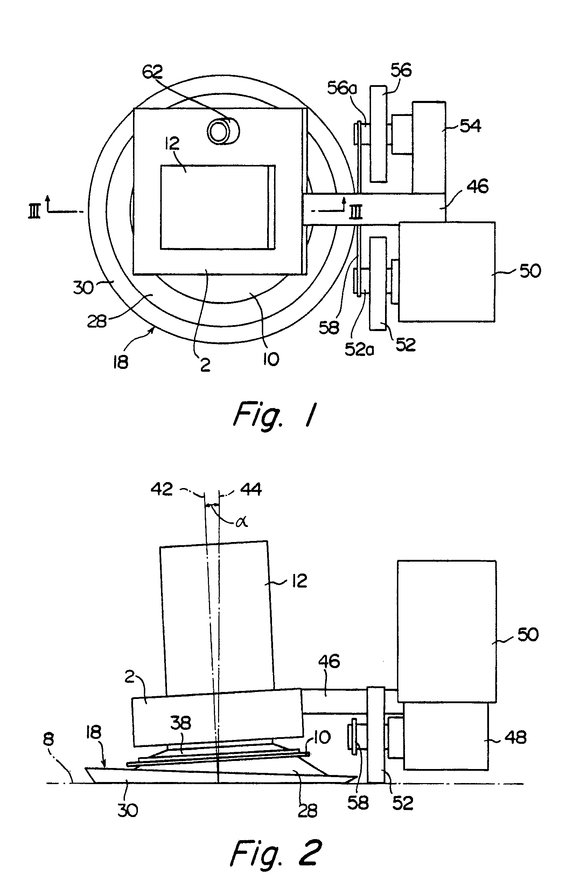

When the evacuating means 60 is operated, a fluid within the pressure reduction zone 4 (for example, air when the device is used in the air) is discharged outside through the flexible hose 64 by the action of the evacuating means 60, and as a result, a vacuum is created within the pressure reduction zone 4. Since the seal portion 20 is flexible and relatively thin, the fluid pressure acting on the pressure receiver member 2 owing to a difference in fluid pressure between the inside and outside of the pressure reduction zone 4 is partly transmitted to the supporting portion 24 of the partition 18 via the driving source 12, the connecting member 14 and the rotating plate 10, and the remainder is transmitted to the wheels 52 and 56 via the frame member 46, the deceleration means 48 (specifically, its housing), etc. Finally, the above fluid pressure is transmitted to the wall surface 8 via the supporting portion 24 of the partition 18 and the wheels 52 and 56, and consequently, the device is caused to adhere to the wall surface 8 by suction. At this time, that site of the supporting portion 22 of the partition 18 which is substantially most remote from the wheels 52 and 56 is brought into contact with the wall surface 8 as clearly shown in Figures 2 and 3 since the rotation axis 42 of the partition 18 is slightly inclined toward that side which is opposite to the side of the wheels 52 and 56.

On the other hand, the fluid pressure acting on the seal portion 20 of the partition 18 owing to a difference in fluid pressure between the inside and outside of the pressure reduction zone 4 biases the seal portion 20 toward the wall surface 8 and thereby brings the free end portion 26 of the main portion 28 of the seal portion 20 into contact with the wall surface 8. The partition 18 is symmetrical, but is deformed as shown in Figures 2 and 3 as a result of the device adhering to the wall surface 8 by suction. The fluid pressure acting on the seal member 38 owing to a difference in fluid pressure between the inside and outside of the pressure reduction zone 4 biases the seal member 38 to-

ward the rotating plate 10 and thereby brings the other end portion of the seal member 38 into contact with the rotating plate 10.

When the driving source 12 is energized during the adherence of the device to the wall surface 8 by suction, the partition 18 is rotated in a predetermined direction about the axis 42 of rotation slightly inclined to the axis 44 extending substantially perpendicularly to the wall surface 8 via the connecting member 14 and the rotating plate 10, and consequently, the wall surface 8 is cleaned. In the above suction-adhering state, a part of the supporting portion 22 and the seal portion 20 are kept in contact with the wall surface 8, and therefore, the wall surface is cleaned by the action of a part of the supporting portion 22 and the seal portion 20. Since the supporting portion 22 also functions as a travelling means as will be described below, it moves little relative to the wall surface 8, and therefore, the above cleaning is carried out mainly by the seal portion 20 of the partition 18. In this embodiment, th e plurality of the circumferentially spaced first grooves 32 are formed on the free end portion 26 of the main portion 28 of the partition 18. It will be easily understood therefore that at the time of cleaning mentioned above, a stream of the fluid leading to the pressure reduction zone 4 from outside through the first grooves 32 is substantially always formed. Hence, dirts (degraded paint fragments, rust, slime, etc.) occurring near the free end portion 26 of the main portion 28 at the time of cleaning are carried into the pressure reduction zone 4 on the stream of the fluid flowing through the first grooves 32, and can be accurately prevented from scattering around. Since in the illustrated embodiment, the first grooves 32 extend radially, radial streams of the fluid extending radially inwardly are formed on substantially the entire circumference of the partition 18, whereby the dirts are prevented from scattering in the entire circumference of the partition 18.

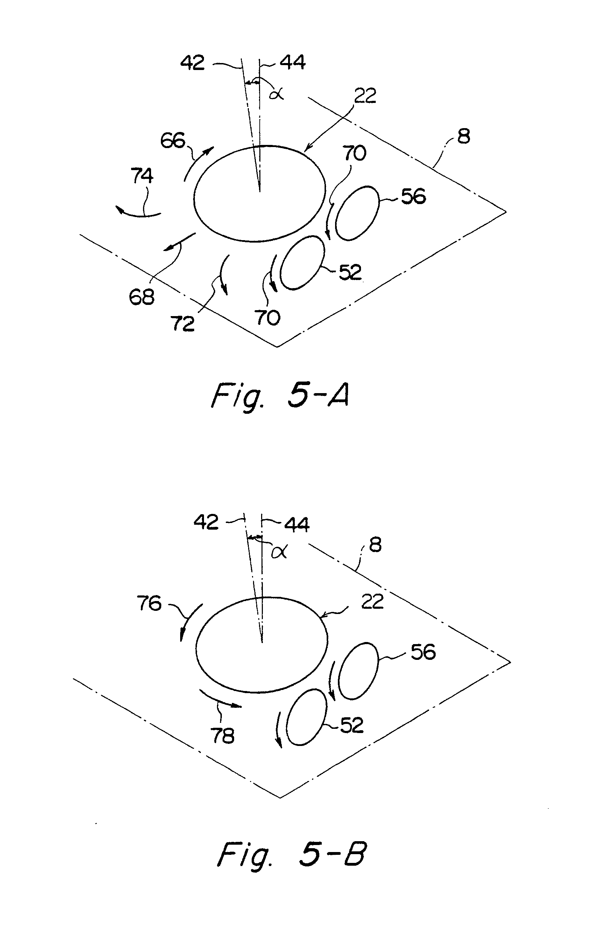

The dirts transferred to the pressure reduction zone 4 are conveyed together with the fluid in the pressure reduction zone to a separator (not shown) by the action of the evacuating source 60. In the separator, the dirts are separated, and the resulting clean fluid is discharged outside. Since the first grooves 32 are formed on the inner surface of the free end portion of the partition 18, that part of the free end portion 26 which does not have the first grooves 32 projects toward the wall surface and acts substantially on the wall surface, and this brings about the advantage of increasing the cleaning efficiency during cleaning. When the partition 18 is rotated as above, the partition 18, particularly its supporting portion 22, acts inclinedly on the wall surface 8 (in other words, only a part of the annular part of the supporting portion 22 acts on the wall surface 8), and as a result, a force tending to move the device is generated between the supporting portion 22 and the wall surface 8. Hence, the device can be caused to travel in a required manner by the partition 18 rotated in this way and the wheels 52 and 56 driven by the electric motor 50. This will be further described with reference to Figures 5-A and 5-B. When the driving source 12 is rotated in a normal direction to rotate the partition 18, and therefore the supporting portion 22, in the direction of an arrow 66, the device tends to move in the direction shown by an arrow 68, i.e. in a direction tangentially opposite to the rotating direction at the site of contact between the supporting portion 22 and the wall surface 8. If at this time, the electric motor 50 is rotated in a normal direction to rotate the wheels 52 and 56 in the direction shown by an arrow 70 and the peripheral speed of the site of contact between the supporting portion 22 and the wall surface 8 is made substantially equal to the peripheral speed of the site of contact between the wheels 52 and 56 and the wall surface 8, the device moves straight in the direction of arrow 68. On the other hand, if the former peripheral speed differs from the latter peripheral speed (for example, if the former is larger than the latter) during the rotation of the driving source 12 and the electric motor 50 in a normal direction, the supporting portion 22 advances ahead and the device moves while curving in the direction of an arrow 72 (opposite to the rotating direction of the supporting portion 22). If the former is smaller than the latter, the wheels 52 and 56 advance ahead, and the device moves while curving in the direction of an arrow 74 (the rotating direction of the supporting portion 22). When the wheels 52 and 56 are rotated in the direction of arrow 70 by rotating the electric motor 50 in a normal direction and in this state the driving source 12 is rotated in the reverse direction to rotate the partition 18 and therefore the supporting portion 22, in the direction shown by an arrow 76, the device pivots nearly about its central axis in the direction shown by an arrow 78 (the rotating direction of the supporting portion 22). During the rotation of the electric motor 50 in the reverse direction, the travelling direction of the device can be changed in the same way.

To obtain a large contact area between the supporting portion 22 and the wall surface 8, it is preferred that the shape of the under surface of the supporting portion 22 should be designed so as to be substantially parallel to the wall surface 8 at that site of the under surface which makes contact with the wall surface 8.

In the device described above, the partition 18 is rotated about the rotation axis 42 slightly inclined to the axis 44 which is substantially perpendicular to the wall surface 8. Because of this, the partition 18 has a sealing function of defining the pressure reduction zone 4 in cooperation with the pressure receiver member 2 and the wall surface 8, a treating function of treating the wall surface 8 as desired (for example, cleaning it) by being rotated relative to the pressure receiver member 2, and a travelling function of moving relative to the wall surface 8 by being rotated inclinedly to the wall surface 8. Accordingly, the device in this embodiment does not separately require means for treating the wall surface, and a travelling means for moving the device can partly be omitted. Hence, further simplification and size reduction can be achieved in the device movable along the wall surface.

The device shown in Figures 1 to 4 may be used by separately attaching treating means such as cleaning means and coating means, or inspection means.

The device described above can be conveniently used in a work of removing in air or in water radioactive corrosion products (so-called slime) adhering to the wall surfaces and floor surfaces of various pools in atomic energy facilities, and in a work of cleaning the outside wall surfaces of ships.

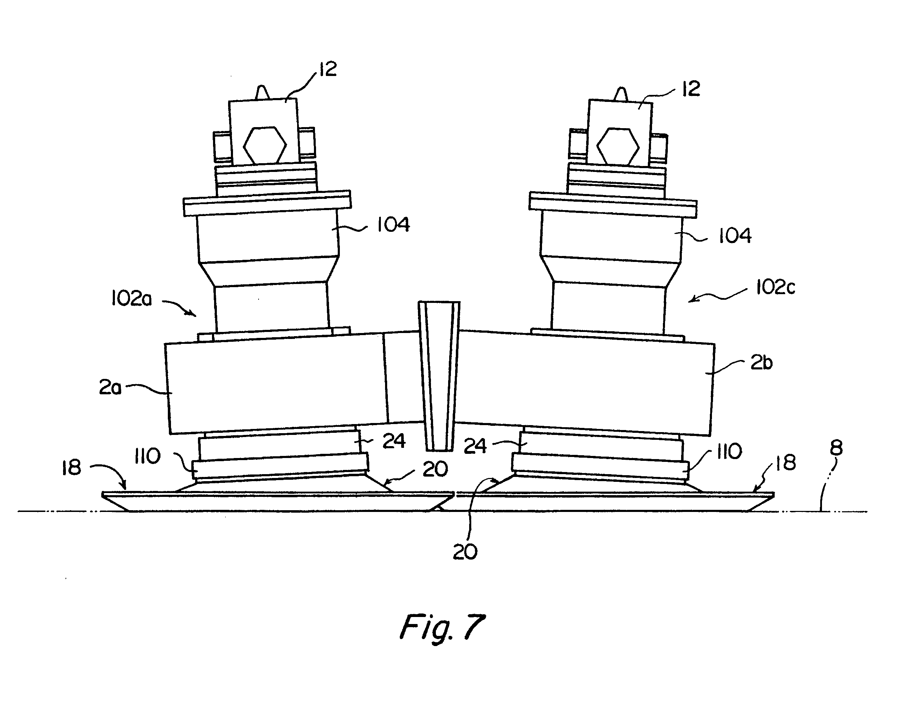

Now, with reference to Figures 6 to 8, the second embodiment of the device constructed in accordance with this invention will be described. In the second embodiment, the device has three units 102a, 102b and 102c of nearly the same structure as the device shown in Figures 1 to 4. For convenience of description, substantially the same members as in the first embodiment are designated by the same reference numerals in the second embodiment.

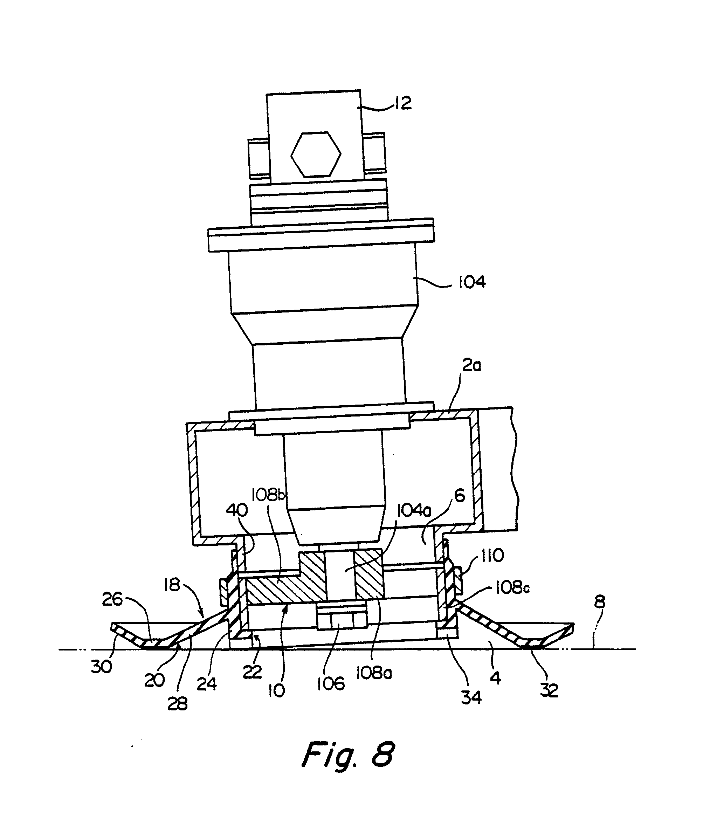

With reference mainly to Figure 6, each of the units 102a, 102b and 102c has a pressure receiver member and a partition defining a pressure reduction zone. In the illustrated embodiment, a one-piece pressure receiver member 2a is formed in the units 102a and 102b, and connected to a pressure receiver member 2b in the unit 102c. A pair of openings 6 (only one of which is shown in Figure 8) vertically spaced from each other (in Figure 6) are provided in the lower wall of the pressure receiver member 2a, and partitions 18 of the units 102a and 102b respectively are disposed at the opening portions of the pair of openings 6. An opening (not shown) is also formed in the lower wall of the pressure receiver member 2b, and a partition 18 of the unit 102c is disposed in the opening portion of this opening. Hence, a pressure reduction zone 118 in the unit 102a communicates with a pressure reduction zone 118 in the unit 102a, and a pressure reduction zone 118 in the unit 102c also communicates with the above pressure reduction zone 118. Alternatively, it is possible to form the units 102a, 102b and 102c separately (in other words,

the units 102a, 102b and 102c each have their own pressure receiver member and partition which define a separate pressure reduction zone), and connecting these units 102a, 102b and 102c via rigid frames.

The units 102a, 102b and 102c have substantially the same structure. With reference to Figure 8, the structure of the unit 102a will be described generally. A deceleration means 104 is mounted on the pressure receiver member 2a, and a driving source 12 such as an electric motor capable of rotating in a normal and a reverse direction is mounted on the deceleration means 104. The output shaft 104a of the deceleration means 104 extends through the box-like pressure receiver member 2a and projects beyond the opening 6 formed in the lower wall, and a rotating member 10 is directly mounted on this projecting end portion by a securing screw 106. The illustrated rotating member 10 has a securing portion 108a fixed to the output shaft 104a of the deceleration means 104, a plurality of arm portions 108b extending radially outwardly from the securing portion 108a and a cylindrical sleeve portion 10c fixed to the end portions of the plurality of arm portions 108b, and the partition 18 is mounted on the cylindrical sleeve portion 108c. In the illustrated embodiment, the partition 18 has an annular member constituting a supporting portion 22. The upper end portion of the annular member 24 is fixed to the peripheral surface of the cylindrical sleeve portion 108c of the rotating member 10 by a steel belt. The partition 18 has a seal portion 20 which defines a pressure reduction zone 4 in cooperation with the pressure receiver member 2a and the wall surface 8. The seal portion 20 is comprised of a main portion 28 extending from one end to the other end (free end) outwardly and toward the wall surface 8 and having a free end portion 26 to be contacted with the wall surface, and an extension 30 extending from the free end portion 26 of the main portion 28 outwardly and away from the wall surface 8. In the illustrated embodiment, a seal member disposed between the pressure receiver member 2a and the rotating member 10 is formed as a unit with the partition 18. The upper end portion of the annular member 24 of the partition has a smaller thickness than the rest, and this thin upper end portion extends upwardly and makes contact with the peripheral surface of a flange portion 40 provided in the opening 6 of the pressure receiver member 2a.

The other structure of the unit 102a (or 102b or 102c) is substantially the same as the first embodiment of the device shown in Figures 1 to 4, and therefore its detailed description is omitted.

It will be understood from Figures 6 and 7 that in the second embodiment, the rotating member 10, and therefore the partition 18, of the units 102a and 102b are rotated about an axis of rotation slightly inclined to the left in Figures 6 and 7 with respect to an axis substantially perpendicular to the wall surface 8. The rotating member 10, and therefore the partition 18, of the unit 102c are rotated about an axis of rotation slightly inclined to the right in Figures 6 and 7 with respect to an axis substantially perpendicular to the wall surface 8. A connecting portion 112 provided in the pressure receiver member 2a has connected thereto a flexible hose (not shown) communicating with the evacuating source. The pressure reduction zone 4 of the units 102a, 102b and 102c is evacuated by the evacuating source (not shown).

In the second embodiment, the pressure of an ambient fluid acting on the seal portion 20 of the partition 18 of each of the units 102a, 102b and 102c is transmitted to the wall surface 8 via the free end portion 26 of the main portion 28 in each seal portion 20 owing to the fluid pressure differences between the inside and outside of the pressure reduction zone 4, and by the fluid pressure acting on each seal portion, the free end portion 26 of the corresponding main portion 28 makes contact with the wall surface 8. On the other hand, the pressure of an ambient fluid acting on the pressure receiver members 2a and 2b owing to the fluid pressure difference between the inside and outside of the pressure reduction zone 4 is transmitted to the wall surface 8 via the deceleration means 104, the rotating member 19 and the annular member 24 of the partition in each of the units 102a, 102b and 102c, and consequently, the device is suction-adhered to the wall surface 8. Since in this embodiment, the partitions 18 in the units 102a and 102b are rotated about an axis of rotation slightly inclined to the left in Figures 6 and 7, that site of the annular member 24 which is positioned at the extreme left in the units 102a and 102b makes contact with the wall surface. Furthermore, since the partition 18 in the unit 102c is rotated about an axis of rotation slightly inclined to the right in Figures 6 and 7, that site of the annular member 24 which is positioned at the extreme right in the unit 102c makes contact with the wall surface 8.

It will be easily understood that the device in accordance with the second embodiment achieves the same result as the device of the first embodiment, and is also characterized by being able to travel for itself without the need for an auxiliary travelling means such as a wheel.

Travelling of the device of the second embodiment will be described at some length with reference to Figure 6. In the illustrated embodiment, when the driving source 12 of the units 102a and 102b are rotated in a normal direction to rotate the partitions 18 in the directions shown by arrows 114 and 116 (the clockwise direction in Figure 6), the device tends to move in the direction shown by arrow 118, namely downwardly in Figure 6. On the other hand, if the driving sources 12 are rotated in a reverse direction to rotate the partitions 18 in the directions of arrows 120 and 122 (the counterclockwise direction in Figure 6), the device tends to move in the direction shown by arrow 124, namely upwardly in Figure 6. When the driving source 12 of the unit 102 is rotated in a normal direction to rotate the partition 18 in the direction shown by arrow 126 (the clockwise direction in Figure 6), the device tends to move in the direction of arrow 124. If the driving source 12 of the unit 102c is rotated in a reverse direction to rotate the partition 18 in the direction of arrow 128 (the counterclockwise direction in Figure 6), the device tends to move in the direction of arrow 118. It will be easily understood therefore that when the partitions 18 of the units 102a and 102b are rotated in the directions of arrows 114 and 116 and the partition 18 of the unit 102c is rotated in the direction of arrow 128, the device is moved straightly in the direction of arrow 118, and that when conversely the partitions 18 of the units 102a and 102b are rotated in the directions of arrows 120 and 122 and the partition 18 of the unit 102c is rotated in the direction of arrow 126, the device is moved straightly in the direction of arrow 124.
When the partitions 18 of the units 102a, 102b and 102c are rotated in the directions of arrows 114, 116 and 126 respectively, the device is pivoted to the left about its approximate center as a center of pivoting. If, on the other hand, the partitions 18 of the units 102a, 102b and 102c are rotated in the directions of arrows 120, 122 and 128 respectively, the device is pivoted to the right about its approximate center as a center of pivoting.

In the second embodiment, the device has three units 102a, 102b and 102c. Two units may alternatively be used if the device can be supported as is required. Or four or more units may be used as desired.

If required, an auxiliary travelling means such as a wheel may be attached to the device of the second embodiment.

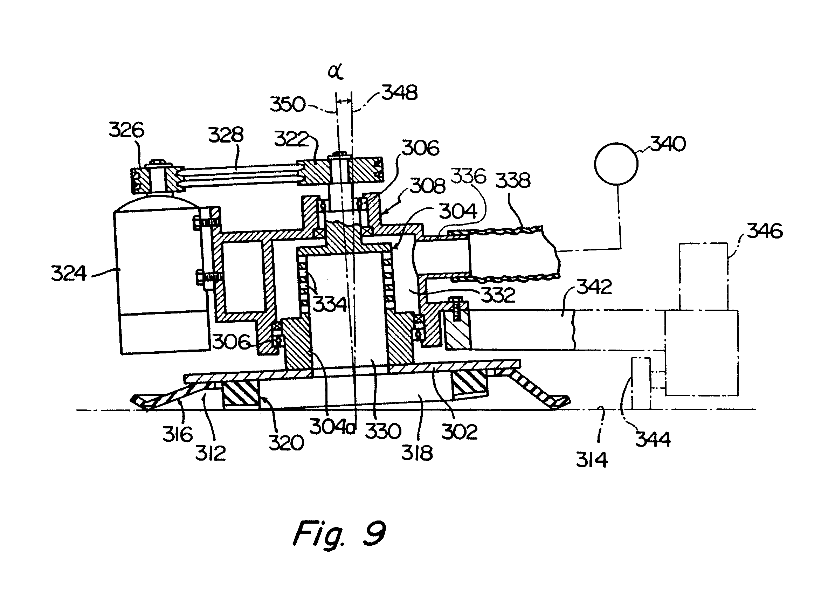

Figure 9 shows a third embodiment of the device in accordance with this invention. In the first embodiment shown in Figures 1 to 4, the partition is rotated about a slightly inclined axis of rotation with respect to the pressure receiver member. By contrast, in the third embodiment, the pressure receiver member and the partition are rotated with respect to the main body of the device.

The device illustrated in Figure 9 has a pressure receiver member 302 which can be formed of a rigid or semirigid material. A shaft member 304 is fixed to the pressure receiver member 302. The shaft member 304 is rotatably mounted on a main body 308 of the device via bearings 306. A parti-

tion 312 is provided on that surface of the pressure receive r member 302 which faces a wall surface 314. The partition 312 includes a seal portion 316 defining a pressure reduction zone 318 in cooperation with the pressure receiver member 302 and the wall surface 314 and a supporting portion 320 disposed inwardly of the seal portion 310. In the third embodiment, the seal portion 316 and the supporting portion 320 are formed independently; otherwise, the structure of the partition 312 is substantially the same as the partition in the first embodiment.

The shaft member 304 projects outwardly from the main body 308 of the device, and a pulley 322 having two V-shaped grooves is mounted on the free projecting end of the shaft member 304. A driving source 324 such as an electric motor is mounted on the main body 308 of the device. A pulley 326 having two V-shaped grooves is mounted on the output terminal of the driving source 324. Two belts 328 are wrapped between the pulleys 322 and 326.

The pressure reduction zone 318 defined by the pressure receiver member 302, the partition 312 and the wall surface 314 is caused to communicate with means for forming a vacuum within the pressure reduction zone 318. An axially extending hollow portion 330 is formed in the large-diameter portion 304a of the shaft member 304. The hollow portion 330 is caused to communicate with the pressure reduction zone 318 through an opening formed in the pressure receiver member 302. An annular space 332 is defined in the main body 308 of the device. The hollow portion 330 communicates with the annular space 332 through a plurality of holes 334 formed in the shaft member 8. A connecting portion 336 is formed in the main body 308 as an integral unit. One end portion of a flexible hose 338 is connected to the connecting portion 336 , and its other end is connected to an exhaust means 340. Furthermore, one end of a rigid frame member 342 is fixed to the main body 308 of the device, and on the other end of the frame member 342 are rotatably mounted a pair of wheels 344 (only one of which is shown in Figure 9). The wheels 344 are rotated by the action of an electric motor 346.

It is critical that in the third embodiment, the pressure receiver member 302 and the partition 312 should rotated about an aixs 350 of rotation slightly inclined to an axis 348 which is substantially perpendicular to the wall surface 314. For this purpose, the central axis of the shaft member 304 fixed to the pressure receiver member 302 is slightly inclined to the axis 348, for example at an inclination angle of 3 degrees ($\alpha = 3°$).

In the third embodiment, too, the partition 312 is rotated about the rotation aixs 350 slightly inclined to the axis 348. Hence, the partition 312 also has a sealing function, a treating function and a travelling function, and achieves substantially the same result as in the first embodiment.

While the invention has been described hereinabove with reference to the various embodiments illustrated in the accompanying drawings, it should be understood that the invention is not limited to these specific embodiments, and various changes and modifications are possible without departing from the scope of the claims.

For example, in the above embodiments, the partition is made of a rubbery material, and the invention has been described with reference to application of the device to the cleaning of a wall surface. For cleaning purposes, the partition may also be made of a woven or nonwoven fabric. Furthermore, by forming the partition from a rubber containing abrasive grains, the device of this invention can be applied to the polishing or grinding of a wall surface. Alternatively, by making the partition from a liquid-impregnable material such as a sponge rubber, the device of the invention can also be applied to the coating of a liquid such as a glossing agent on a wall surface.

## Claims

1. A device capable of adhering to a wall surface by suction by the pressure of an ambient fluid and moving along the wall surface, said device comprising
   a pressure receiver member (2) made of a rigid or a semirigid material,
   a partition (18) disposed on that side of the pressure receiver member (2) which is opposite to the wall surface, said partition being rotatable about an axis of rotation slightly inclined to an axis substantially perpendicular to the wall surface, and a part of said partition being adapted to make contact with the wall surface to define a pressure reduction zone (4) in cooperation with the pressure receiver member (2) and the wall surface (8),
   means for creating a vacuum within the pressure reduction zone (4) by discharging the fluid from the pressure reduction zone, and
   a driving source (12) mounted on the pressure receiver member (2) for rotating the partition (18) with respect to the pressure receiver member (2);
   wherein the device is caused to adhere to the wall surface (8) by suction owing to a difference in fluid pressure between the inside and outside of the pressure reduction zone (4), and the device is moved by rotating the partition (18) through the driving source (12).

2. The device of claim 1, wherein the partition (18) is rotated about the axis (42) of rotation slightly inclined to the axis (44) substantially perpendicular to the wall surface (8) by the action of the driving source (12), whereby the device is moved and the wall surface is treated.

3. The device of claim 1, wherein the partition (18) is mounted rotatably relative to the pressure receiver member (2).

4. The device of claim 3, wherein a rotating plate (10) adapted to rotate by the driving source (12) about said axis (42) of rotation is provided on that side of the pressure receiver member (2) which faces the wall surface; one end portion of the partition (18) is connected to the rotating plate (10); and the rotating plate (10) has formed therein an opening (36) for communication between a first zone defined by the rotating plate (10), the partition (18) and the wall surface (8) and a second zone defined by the rotating plate (10) and the pressure receiver member (2).

5. The device of claim 4, which further comprises an annular seal member (38) disposed between the pressure receiver member (2) and the rotating plate (10).

6. The device of claim 3, wherein at least one wheel or endless track adapted to make contact with the wall surface (8) is provided in the pressure receiver member (2).

7. The device of claim 6, wherein a driving source is mounted on the pressure receiver member (2) for driving said at least one wheel or endless track, and said at least one wheel or endless track, in cooperation with the partition (18) rotated by the driving source (12), causes the device to travel.

8. The device of claim 1, wherein the partition (18) is connected to the pressure receiver member (2), and the pressure receiver member (2) is mounted rotatably relative to the main body of the device.

9. The device of claim 8, wherein at least one wheel or endless track adapted to make contact with the wall surface (8) is provided in the main body.

10. The device of claim 9, wherein a driving source is mounted on the main body for driving said at least one wheel or endless track, and said at least one wheel or endless track, in cooperation with the partition (18) rotated by the driving source (12), cause the device to travel.

11. The device of claim 1, wherein the partition comprises a seal portion (20) defining the pressure reduction zone (4) in cooperation with the pressure receiver member (2) and the wall surface (8) and a supporting portion (22) disposed inwardly of the seal portion (20); the seal portion (20) of the partition (18) is such that at least that site of it which makes contact with the wall surface (8) can be displaced toward and away from the wall surface with respect to the pressure receiver member (2) by a relatively small force; said site of the seal portion (20) is brought into contact with the wall surface by the fluid pressure acting on the seal portion (20) owing to a difference in fluid pressure between the inside and outside of the pressure reduction zone (4); and meanwhile, the fluid pressure acting on the pressure receiver member (2) owing to a difference in fluid pressure between the inside and outside of the pressure reduction zone (4) is transmitted to the wall surface (8) via the supporting portion (22) of the partition (18), whereby the device is caused to adhere to the wall surface by suction.

12. The device of claim 11, wherein the supporting portion (22) of the partition (18) is constructed of an annular member (24); the seal portion (20) comprises a main portion (28) extending from one end connected to the peripheral surface of the upper part of the annular member (24) outwardly and toward the wall surface (8) and having a free end portion (26) to be contacted with the wall surface (8), and an extension (30) extending further outwardly from the free end portion (26) of the main portion (28) in a direction away from the wall surface; the free end portion (26) of the seal portion (20) is brought into contact with the wall surface (8) by the fluid pressure acting on the seal portion (20) owing to a difference in fluid pressure between the inside and outside of the pressure reduction zone (4).

13. The device of claim 12, wherein a plurality of circumferentially spaced first grooves (32) permitting communication between the inside and outside of the pressure reduction zone (4) are formed in the free end portion (26) of the main portion (28) in the partition (18).

14. The device of claim 12, wherein a plurality of circumferentially spaced second grooves (34) are formed in, and extending through, the annular member (24) of the partition (18).

15. The device of claim 1, wherein a plurality of units each including the pressure receiver member (2) and the partition (18) and defining the pressure reduction zone (4) in cooperation with the pressure receiver member (2), the wall surface (8) and the partition (18) are provided, and the units are connected to each other.

16. The device of claim 15, wherein the partition of each of the units has a seal portion (20) defining the pressure reduction zone (4) in cooperation with the pressure receiver member (2) and the wall surface (8) and a supporting portion (22) disposed inwardly of the position at which the seal portion (20) is provided; at least that part of the seal portion (20) of the partition (18) which is to make contact with the wall surface (8) is adapted to be displaced by a relatively small force toward and away from the wall surface (8) with respect to the rotating member; the fluid pressure acting on the seal portion (20) owing to the fluid pressure difference between the inside and the outside of the pressure reduction zone (4) causes said part of the seal portion (20) to make contact with the wall surface (8), and meanwhile, the fluid pressure acting on the pressure receiver member (2) owing to the fluid pressure difference between the inside and outside of the pressure reduction zone (4) is transmitted to the wall surface (8) via the supporting portion (22) of the partition (18) in the units whereby the device is caused to suction-adhere to the wall surface (8).

## Revendications

1. Un dispositif apte à adhérer à une surface de paroi par suction par la pression d'un fluide ambiant et à se mouvoir le long de la surface de paroi, ledit dispositif comprenant

un organe récepteur de pression (2) fait en un matériau rigide ou semi-rigide,

une cloison (18) disposée sur la face de l'organe récepteur de pression (2) qui est opposée à la surface de paroi, ladite cloison étant rotative autour d'un axe de rotation légèrement incliné par rapport à un axe sensiblement perpendiculaire à la surface de paroi, et une partie de ladite cloison étant agencée pour faire contact avec la surface de paroi pour définir une zone de réduction de pression (4) en coopération avec l'organe récepteur de pression (2) et la surface de paroi (8),

un moyen pour créer un vide à l'intérieur de la zone de réduction de pression (4) en évacuant le fluide de la zone de réduction de pression, et

une source motrice (12) montée sur l'organe récepteur de pression (2) pour faire tourner la paroi (18) par rapport à l'organe récepteur de pression (2),

dans lequel le dispositif est amené à adhérer à la surface de paroi (8) par suction du fait de la différence de pression de fluide entre l'intérieur et l'extérieur de la zone de réduction de pression (4) et le dispositif est déplacé en faisant tourner la cloison (18) par la source motrice (12).

2. Le dispositif de la revendication 1,
dans lequel la cloison (18) est entraînée en rotation autour de l'axe (42) de rotation légèrement inclinée par rapport à l'axe (44) sensiblement perpendiculaire à la surface de paroi (8) sous l'action de la source motrice (12), grâce à quoi le dispositif est déplacé et la surface de paroi est traitée.

3. Le dispositif de la revendication 1,
dans lequel la cloison (18) est montée rotative par rapport à l'organe récepteur de pression (2).

4. Le dispositif de la revendication 3,
dans lequel une plaque rotative (10) agencée pour être entraînée en rotation par la source motrice (12) autour dudit axe (42) de rotation est disposée sur la face de l'organe récepteur de pression (2) qui fait face à la surface de paroi, une portion d'extrémité de la cloison (18) est reliée à la plaque rotative (10), et la plaque rotative (10) a une ouverture (36) formée dedans pour communiquer entre une première zone définie par la plaque rotative (10), la cloison (18) et la surface de paroi (8) et une seconde zone définie par la plaque rotative (10) et l'organe récepteur de pression (2).

5. Le dispositif de la revendication 4,
qui comprend en outre un organe d'étanchéité annulaire (38) disposé entre l'organe récepteur de pression (2) et la plaque rotative (10).

6. Le dispositif de la revendication 3,
dans lequel au moins une roue ou une glissière de guidage sans fin agencée pour faire contact avec la surface de paroi (8) est disposée dans l'organe récepteur de pression (2).

7. Le dispositif de la revendication 6,
dans lequel une source motrice est montée sur l'organe récepteur de pression (2) pour entraîner ladite au moins une roue ou une glissière de guidage sans fin, et ladite au moins une roue ou une glissière de guidage sans fin fait déplacer le dispositif en coopération avec la cloison (18) entraînée en rotation par la source motrice (12).

8. Le dispositif de la revendication 1,
dans lequel la cloison (18) est connectée à l'organe récepteur de pression (2), et l'organe récepteur de pression (2) est monté rotatif par rapport au corps principal du dispositif.

9. Le dispositif de la revendication 8,
dans lequel au moins une roue ou une glissière de guidage sans fin agencée pour faire contact avec la surface de paroi (8) est disposée dans le corps principal.

10. Le dispositif de la revendication 9,
dans lequel une source motrice est montée sur le corps principal pour entraîner ladite au moins une roue ou une glissière de guidage sans fin, et ladite au moins une roue ou une glissière de guidage sans fin fait déplacer le dispositif en coopération avec la cloison (18) entraînée en rotation par la source motrice (12).

11. Le dispositif de la revendication 1,
dans lequel la cloison comprend une portion d'étanchéité (20) définissant une zone de réduction de pression (4) en coopération avec l'organe réducteur de pression (2) et la surface de paroi (8), et une portion de support (22) disposée vers l'intérieur de la portion d'étanchéité (20), la portion d'étanchéité (20) de la cloison (18) est telle qu'au moins son emplacement qui fait contact avec la surface de paroi (8) peut être rapproché et écarté de la surface de paroi par rapport à l'organe récepteur de pression (2) au moyen d'une force relativement faible, ledit emplacement de la portion d'étanchéité (20) est amené en contact avec la surface de paroi par la pression de fluide agissant sur la portion d'étanchéité (20) du fait de la différence de pression de fluide entre l'intérieur et l'extérieur de la zone de réduction de pression (4) et, en même temps, la pression de fluide agissant sur l'organe récepteur de pression (2) du fait de la différence de pression de fluide entre l'intérieur et l'extérieur de la zone de réduction de pression (4) est transmise à la surface de paroi (8) par l'intermédiaire de la portion de support (22) de la cloison (18) grâce à quoi le dispositif est amené à adhérer à la surface de paroi par suction.

12. Le dispositif de la revendication 11,
dans lequel la portion de support (22) de la cloison (18) est formée par un organe annulaire (24), la portion détanchéité (20) comprend une partie principale (28) s'étendant depuis une extrémité connectée à la surface périphérique de la partie supérieure de l'organe annulaire (24) vers l'extérieur et en direction de la surface de paroi (8), et ayant une portion d'extrémité (26) libre destinée à venir en contact avec la surface de paroi (8), et un prolongement (30) s'étendant plus loin vers l'extérieur depuis la portion d'extrémité (36) libre de la portion principale (28) dans une direction opposée à la surface de paroi, la paroi d'extrémité (26) libre de la portion étanchéité (20) est amenée en contact avec la surface de paroi (20) par la pression de fluide agissant sur la portion d'étanchéité (20) du fait d'une différence de pression de fluide entre l'intérieur et l'extérieur de la zone de réduction de pression (4).

13. Le dispositif de la revendication 12,
dans lequel une pluralité de première rainures (32) espacées circonférentiellement permettant une communication entre l'intérieur et l'extérieur de la zone de réduction de pression (4) sont formées dans la portion d'extrémité (26) libre de la portion principale (28) dans la cloison (18).

14. Le dispositif de la revendication 12,
dans lequel une pluralité de secondes rainures (34) espacées circonférentiellement sont formées dans l'organe annulaire (24) de la cloison et s'étendent à travers celle-ci.

15. Le dispositif selon la revendication 1,
dans lequel on prévoit une pluralité d'unités comprenant chacune l'organe récepteur de pression (2) et la cloison (18) et définissant la zone de réduction de pression (4) en coopération avec l'organe récepteur de pression (2), la surface de paroi (8) et la cloison (18), et les unités sont connectées les unes aux autres.

16. Le dispositif de la revendication 15, dans lequel la cloison de chacune des unités a une portion d'étanchéité (20) définissant la zone de réduction de pression (4) en coopération avec l'organe récepteur de pression (2) et la surface de paroi (8) et une portion de support (22) disposée vers l'intérieur de la position à laquelle est disposée la portion d'étanchéité (20), au moins la partie de la portion d'étanchéité (20) de la cloison (18) qui est destinée à faire contact avec la surface de paroi (8) et agencée pour être rapprochée et écartée de la surface de paroi (8) par rapport à l'organe rotatif par une force relativement faible, la pression de fluide agissant sur la portion d'étanchéité (20) du fait de la différence de pression de fluide entre l'intérieur et l'extérieur de la zone de réduction de pression (4) fait venir ladite partie de la portion d'étanchéité (20) en contact avec la surface de paroi (8) et, en même temps, la pression de fluide agissant sur l'organe récepteur de pression (2) du fait de la différence de pression de fluide entre l'intérieur et l'extérieur de la zone de réduction de pression (4) est transmise à la surface de paroi (8) par l'intermédiaire de l'organe de support (22) de la cloison (18) dans les unités, grâce à quoi le dispositif est amené à adhérer par suction à la surface de paroi (8).

**Patentansprüche**

1. Vorrichtung zum Anhaften an einer Wandoberfläche durch Saugkraft aufgrund des Drucks eines Umgebungsfluids und zum Bewegen entlang der Wandoberfläche, umfassend
ein Druckaufnahmeelement (2) aus einem steifen oder halbsteifen Material,
ein Trennelement (18), das auf der Seite des Druckaufnahmeelements (2) angeordnet ist, die der Wandoberfläche gegenüberliegt, wobei das Trennelement um eine Drehachse drehbar ist, die zu einer zur Wandoberfläche im wesentlichen senkrechten Achse leicht geneigt ist, und ein Teil des Trennelements mit der Wandoberfläche in Kontakt bringbar ist, um gemeinsam mit dem Druckaufnahmeelement (2) und der Wandoberfläche (8) eine Druckreduzierzone (4) zu definieren,
eine Einrichtung, die durch Ableiten des Fluids aus der Druckreduzierzone innerhalb dieser ein Vakuum erzeugt, und eine Antriebsquelle (12), die an dem Druckaufnahmeelement (2) angeordnet ist und das Trennelement (18) relativ zum Druckaufnahmeelement (2) dreht;
wobei bewirkt wird, daß die Vorrichtung durch Saugwirkung aufgrund einer Fluiddruckdifferenz zwischen der Innen- und der Außenseite der Druckreduzierzone (4) an der Wandoberfläche haftet und durch Drehen des Trennelements (18) durch die Antriebsquelle (12) bewegt wird.

2. Vorrichtung nach Anspruch 1, wobei das Trennelement (18) durch die Wirkung der Antriebsquelle (12) um die Drehachse (42) gedreht wird, die zu der zur Wandoberfläche (8) im wesentlichen senkrechten Achse (44) leicht geneigt ist, wodurch die Vorrichtung bewegt und die Wandoberfläche behandelt wird.

3. Vorrichtung nach Anspruch 1, wobei das Trennelement (18) relativ zum Druckaufnahmeelement (2) drehbar angeordnet ist.

4. Vorrichtung nach Anspruch 3, wobei eine Drehplatte (10), die durch die Antriebsquelle (12) um die Drehachse (42) drehbar ist, auf der Seite des Druckaufnahmeelements (2) angeordnet ist, die der Wandoberfläche zugewandt ist; ein Endabschnitt des Trennelements (18) mit der Drehplatte (10) verbunden ist; und in der Drehplatte (10) eine Öffnung (36) ausgebildet ist, die zwischen einer durch die Drehplatte (10), das Trennelement (18) und die Wandoberfläche (8) definierten ersten Zone und einer durch die Drehplatte (10) und das Druckaufnahmeelement (2) definierten zweiten Zone eine Verbindung herstellt.

5. Vorrichtung nach Anspruch 4, ferner umfassend ein ringförmiges Dichtelement (38), das zwischen dem Druckaufnahmeelement (2) und der Drehplatte (10) angeordnet ist.

6. Vorrichtung nach Anspruch 3, wobei in dem Druckaufnahmeelement (2) wenigstens ein Rad oder eine Raupenkette zum Kontakt mit der Wandoberfläche (8) vorgesehen ist.

7. Vorrichtung nach Anspruch 6, wobei an dem Druckaufnahmeelement (2) eine Antriebsquelle angeordnet ist, die das wenigstens eine Rad oder die Raupenkette antreibt, und das wenigstens eine Rad oder die Raupenkette gemeinsam mit dem durch die Antriebsquelle (12) gedrehten Trennelement (18) ein Verfahren der Vorrichtung bewirkt.

8. Vorrichtung nach Anspruch 1, wobei das Trennelement (18) mit dem Druckaufnahmeelement (2) verbunden und dieses relativ zum Hauptkörper der Vorrichtung drehbar angeordnet ist.

9. Vorrichtung nach Anspruch 8, wobei in dem Hauptkörper wenigstens ein Rad oder eine Raupenkette zum Kontakt mit der Wandoberfläche (8) vorgesehen ist.

10. Vorrichtung nach Anspruch 9, wobei an dem Hauptkörper eine Antriebsquelle angeordnet ist, die das wenigstens eine Rad oder die Raupenkette antreibt, und das wenigstens eine Rad oder die Raupenkette gemeinsam mit dem durch die Antriebsquelle (12) gedrehten Trennelement (18) ein Verfahren der Vorrichtung bewirkt.

11. Vorrichtung nach Anspruch 1, wobei das Trennelement ein Abdichtteil (20) aufweist, das gemeinsam mit dem Druckaufnahmeelement (2) und der Oberfläche (8) und einem innerhalb des Abdichtteils (20) angeordneten Tragteil (22) die Druckreduzierzone (4) definiert; das Abdichtteil (20) des Trennelements (18) derart ist, daß wenigstens die Stelle davon, die mit der Wandoberfläche (8) in Kontakt ist, relativ zum Druckaufnahmeelement (2) durch eine relativ geringe Kraft zur Wandoberfläche und davon weg verlagerbar ist; die genannte Stelle des Abdichtteils (20) durch den aufgrund einer Fluiddruckdifferenz zwischen der Innen- und der Außenseite der Druckreduzierzone (4) auf das Abdichtteil (20) einwirkenden Fluiddruck mit der Wandoberfläche in Kontakt gebracht wird; und in der Zwischenzeit der aufgrund einer Fluiddruckdifferenz zwischen der Innen- und der Außenseite der Druckreduzierzone (4) auf das Druckaufnahmeelement (2) einwirkende Fluiddruck über das Tragteil (22) des Trennelements (18) auf die Wandoberfläche (8) übertragen wird, wodurch ein Anhaften der Vorrichtung an der Wandoberfläche durch Saugkraft bewirkt wird.

12. Vorrichtung nach Anspruch 11, wobei das Tragteil (22) des Trennelements (18) aus einem Ringelement (24) gebildet ist; das Abdichtteil (20) umfaßt: einen Hauptteil (28), der von einem mit der Umfangsfläche des oberen Teils des Ringelements (24) verbundenen Ende nach außen und zur Wandoberfläche (8) verläuft und einen freien Endabschnitt (26) zum Kontakt mit der Wandoberfläche (8) aufweist, und einen Ansatz (30), der vom freien Endabschnitt (26) des Hauptteils (28) in einer von der Wandoberfläche wegführenden Richtung weiter nach außen verläuft; der freie Endabschnitt (26) des Abdichtteils (20) durch den aufgrund einer Fluiddruckdifferenz zwischen der Innen- und der Außenseite der Druckreduzierzone (4) auf das Abdichtteil (20) einwirkenden Fluiddruck mit der Wandoberfläche (8) in Kontakt gebracht wird.

13. Vorrichtung nach Anspruch 12, wobei in dem freien Endabschnitt (26) des Hauptteils (28) des Trennelements (18) eine Vielzahl von umfangsmäßig beabstandeten ersten Nuten (32) ausgebildet ist, die eine Verbindung zwischen der Innen- und der Außenseite der Druckreduzierzone (4) ermöglichen.

14. Vorrichtung nach Anspruch 12, wobei in dem Ringelement (24) des Trennelements (18) eine Vielzahl von umfangsmäßig beabstandeten zweiten Nuten (34) ausgebildet ist, die durch das Ringelement (24) verlaufen.

15. Vorrichtung nach Anspruch 1, wobei eine Vielzahl von Einheiten, die jeweils das Druckaufnahmeelement (2) und das Trennelement (18) aufweisen und gemeinsam mit dem Druckaufnahmeelement (2), der Wandoberfläche (8) und dem Trennelement (18) die Druckreduzierzone (4) definieren, vorgesehen ist und die Einheiten miteinander verbunden sind.

16. Vorrichtung nach Anspruch 15, wobei das Trennelement jeder Einheit ein Abdichtteil (20) aufweist, das gemeinsam mit dem Druckaufnahmeelement (2) und der Wandoberfläche (8) und einem innerhalb der Stelle, an der das Abdichtteil (20) vorgesehen ist, angeordneten Tragteil (22) die Druckreduzierzone (4) definiert; wenigstens der Teil des Abdichtteils (20) des Trennelements (18), der mit der Wandoberfläche in Kontakt gelangen soll, durch eine relativ geringe Kraft relativ zu dem sich drehenden Element zur Wandoberfläche (8) und davon weg verlagerbar ist; der aufgrund der Fluiddruckdifferenz zwischen der Innen- und der Außenseite der Druckreduzierzone (4) auf den Abdichtteil (20) einwirkende Fluiddruck bewirkt, daß der genannte Teil des Abdichtteils (20) mit der Wandoberfläche (8) in Kontakt gelangt, und in der Zwischenzeit der aufgrund der Fluiddruckdifferenz zwischen der Innen- und der Außenseite der Druckreduzierzone (4) auf das Druckaufnahmeelement (2) einwirkende Fluiddruck über das Tragteil (22) des Trennelements (18) der Einheiten auf die Wandoberfläche (8) übertragen wird, wodurch eine Saughaftung der Vorrichtung an der Wandoberfläche (8) bewirkt wird.

Fig. 1

Fig. 2

Fig. 3

Fig. 4

Fig. 6

Fig. 5-A

Fig. 5-B

*Fig. 7*

EP 0 221 543 B1

*Fig. 8*

Fig. 9